# EUROPÄISCHE PATENTSCHRIFT

(11) **EP 2 866 993 B1**
(45) Veröffentlichungstag und Bekanntmachung des Hinweises auf die Patenterteilung: **04.05.2022**
(21) Anmeldenummer: 13749973.7
(22) Anmeldetag: 28.06.2013
(51) Int. Cl.: B28D 1/08, B23D 57/00

(54) **SEILSÄGE**
CABLE SAW
SCIE À CÂBLE

(30) Priorität: 28.06.2012 AT 7222012
(43) Veröffentlichungstag der Anmeldung: 06.05.2015
(73) Patentinhaber: Hatzer, Markus, 9972 Virgen (AT)
(72) Erfinder: Hatzer, Markus, 9972 Virgen (AT)
(74) Vertreter: Beer & Partner Patentanwälte KG
(86) Internationale Anmeldenummer: PCT/AT2013/000112
(87) Internationale Veröffentlichungsnummer: WO 2014/000005

(56) Entgegenhaltungen:
- DE-A1-102005 037 542
- ES-A1- 2 284 363
- GB-A- 191 023 918
- JP-A- H02 307 097
- US-A- 5 173 250

## Beschreibung

Die Erfindung betrifft eine Eintauchseilsäge nach dem Oberbegriff des Anspruchs 1.

Des Weiteren betrifft die Erfindung ein Verfahren nach dem Oberbegriff des Anspruchs 7.

Eine solche Eintauchseilsäge und ein solches Verfahren sind der JP H02307 097 A zu entnehmen.

Das Einsatzgebiet der Erfindung bezieht sich insbesondere auf den Abbau von Felsen in Natursteinbrüchen sowie auf das Schneiden von größeren armierten Betonfundamenten auf Baustellen. Die Erfindung kann jedoch überall dort zum Einsatz kommen, wo massive Werkstücke durch lange und/oder tiefe Schnitte abgebaut werden sollen.

Eine gattungsgemäße Eintauchseilsäge ist aus JP H02307 097 A bekannt. Eintauchseilsägen sind aus ES 2 284 363 A1 und US 5,173,250 A bekannt. Eine Eintauchsäge, die jedoch keine Seilsäge ist, ist aus GB 23918 A bekannt. Eine Seilsäge, die jedoch keine Eintauchseilsäge ist, ist aus DE 10 2005 037542 A1 bekannt.

Mit Seilsägen werden Werkstücke, meist große massive Objekte, wie Natursteine, mit von Motoren angetriebenen Sägeseilen zerteilt. Beim Abbau von Steinen in Steinbrüchen sind Seilsägen bekannt, die einen bereits aus dem Berg herausgelösten Steinblock zerteilen. Seilsägen zum Zerkleinern von einem bereits aus dem Berg herausgelösten Steinblock können nicht zum Herauslösen eines Steinblocks aus dem Berg verwendet werden, da sie nicht in den Berg hinein schneiden können.

Zum Herauslösen eines Steinblocks aus dem Berg sind bislang sogenannte Schwertsägen bekannt, die mit einem mit Diamantsegmenten versehenen Gürtel als Schneidwerkzeug aufweisen. Eine solche Schwertsäge ist beispielsweise in der US 4,679,541 offenbart. Nachteilig bei diesen Schwertsägen ist insbesondere, dass mit dem relativ breiten Gürtel keine genau geführten Schnitte ausgeführt werden können.

Der Erfindung liegt die Aufgabe zu Grunde, eine Vorrichtung sowie ein Verfahren der eingangs genannten Gattung zur Verfügung zu stellen, mit welchem der Nachteil des Standes der Technik überwunden wird.

Gelöst wird diese Aufgabe erfindungsgemäß mit einer Vorrichtung, welche die Merkmale des Patentanspruches 1 aufweist. Zudem wird diese Aufgabe erfindungsgemäß mit einem Verfahren gelöst, welche die Merkmale des Patentanspruches 7 aufweist.

Bevorzugte und vorteilhafte Ausführungsformen der Erfindung sind Gegenstand der Unteransprüche.

Erfindungsgemäß ist vorgesehen, dass die Eintauchseilsäge einen Seilspeicher mit wenigstens zwei Umlenkrollen, in welchen das Sägeseil mehrmals geführt ist, aufweist und dass die Längserstreckung der beiden Längsarme veränderbar ist, sodass die räumliche Erstreckung der Führungseinrichtung veränderbar ist, während das Sägeseil angetrieben ist. Somit können besonders genaue und klar geführte Schnitte z.B. in den Berg ausgeführt werden.

Die Führungseinrichtung weist wenigstens zwei in einem Abstand voneinander angeordnete Längsarme, an welchen das Sägeseil geführt ist, auf. Somit können die Längsarme in vorgefertigte Bohrlöcher eingeführt werden und das Werkstück mit einem genauen, klar geführten Schnitt unter Seilspannung aus z.B. einem abzubauenden Berg schneiden.

Im Rahmen der Erfindung definiert dabei der Abstand der vorzugsweise zwei Längsarme im Wesentlichen die Schneidbreite der Eintauchseilsäge.

Erfindungsgemäß ist vorgesehen, dass der Abstand der beiden Längsarme zueinander sowie die Längserstreckung der beiden Längsarme veränderbar ist. Somit kann die Schneidbreite und/oder die Schneidhöhe des Sägeaggregates auch während dem Sägen verändert werden. Zudem kann erreicht werden, dass die Eintauchseilsäge während der Fahrt zum Einsatzort kompakt ist und erst am Einsatzort vergrößert wird.

Erfindungsgemäß ist vorgesehen, dass die Führungseinrichtung Teleskoparme aufweist, an denen Umlenkrollen, in welchen das Sägeseil geführt ist, angeordnet sind. Weiters ist vorgesehen, dass diejenigen Umlenkrollen, welche beim Herauslösen des Werkstückes aus z.B. einem Berg in Bohrlöcher eingeführt werden, durch einen Fräskopf gebildet sind.

Um die räumliche Erstreckung des Sägeaggregates verändern zu können, wobei das Sägeseil die gewollte Seilspannung beibehält, kann die erfindungsgemäße Eintauchseilsäge weiterhin zum Seilspeicher auch einen Seilspanner aufweisen. Der Seilspeicher und ggf. der Seilspanner weist/weisen wenigstens zwei Umlenkrollen, in welchen das Sägeseil mehrmals geführt ist, auf. Der Abstand dieser Umlenkrollen kann beispielsweise durch Teleskoparme verändert werden. Es kann vorgesehen sein, dass der Seilspanner und der Seilspeicher aus den selben Bauteilen gebildet ist. Insbesondere der Seilspeicher bzw. der Seilspanner tragen zu dem Vorteil bei, dass das Sägeseil bei einer Veränderung der räumlichen Erstreckung der Führungseinrichtung nicht geöffnet werden muss. Der Seilspanner und der Seilspeicher können aus den selben Bauteilen gebildet sein.

In einer besonders bevorzugten Ausführungsform der Erfindung ist vorgesehen, dass die Eintauchseilsäge wenigstens eine Einrichtung zum Ändern der räumlichen Ausrichtung des Sägeaggregates aufweist. Somit wird durch die erfindungsgemäße Eintauchseilsäge ermöglicht, dass die Eintauchseilsäge genau auf die Bohrlöcher ausgerichtet wird und dass horizontale, vertikale und auch schräge Schnitte besonders fein ausgeführt werden können. Die räumliche Ausrichtung des Sägeaggregates kann während dem Betrieb der mobilen Eintauchseilsäge, d. h. während das Sägeseil angetrieben ist, verändert werden.

Insbesondere kann vorgesehen sein, dass das Sägeaggregat um eine über die Breite der Führungseinrichtung (= Schneidbreite) verlaufenden Achse kippbar gelagert ist, wobei die Einrichtung zum Ändern der räumlichen Ausrichtung eine Einrichtung zum Kippen des Sägeaggregates, insbesondere wenigstens einen Kippzylinder, aufweist. Alternativ oder zusätzlich dazu kann vorgesehen sein, dass das Sägeaggregat um eine über die Höhe der Führungseinrichtung (= Schneidhöhe) Achse schwenkbar gelagert ist, wobei die. Einrichtung zum Ändern der räumlichen Ausrichtung eine Einrichtung zum Schwenken des Sägeaggregates aufweist. Alternativ oder zusätzlich dazu kann vorgesehen sein, dass die Eintauchseilsäge "ausgefahren" werden kann, d.h. dass der Abstand zwischen dem Sägeaggregat und einer Trägervorrichtung, an welcher die Eintaucheilsäge angeordnet ist, veränderbar ist. In dieser Ausführungsform weist die Einrichtung zum Ändern der räumlichen Ausrichtung eine Einrichtung zum Verändern des Abstandes zwischen dem Sägeaggregat und der Trägervorrichtung auf. Alternativ oder zusätzlich dazu kann vorgesehen sein, dass das Sägeaggregat um eine im Wesentlichen senkrecht zur räumlichen Erstreckung der Führungseinrichtung verlaufenden Achse drehbar gelagert ist, wobei die Einrichtung zum Ändern der räumlichen Ausrichtung eine Einrichtung zum Drehen des Sägeaggregates aufweist.

Im Rahmen der Erfindung kann der Antrieb ein rein hydraulischer Antrieb oder ein rein elektrischer Antrieb oder ein elektrohydraulischer Antrieb sein. Der Antrieb an der Führungsvorrichtung der erfindungsgemäßen Eintauchseilsäge, beispielsweise oberhalb des Seilspeichers oder im Bereich des Seilspeichers, angeordnet sein. Der Antrieb muss im Rahmen der Erfindung nicht notwendigerweise Teil der Eintauchseilsäge an sich sein, sondern kann auch Teil der Trägervorrichtung sein.

Um das Sägeaggregat kann ein Schutzgehäuse angeordnet sein, was die Betriebssicherheit beim Reißen des Sägeseiles erhöht. Die Größe des Gehäuses kann veränderbar sein, um sich an ändernde räumliche Erstreckungen der Führungseinrichtung anpassen zu können.

Die erfindungsgemäße mobile Eintauchseilsäge kann in verschiedenen Baugrößen, beispielsweise mit einer veränderbaren Schneidbreite von 2 - 4 m und/oder mit einer beispielhaft angegebenen veränderbaren Schneidtiefe von ca. 0,5 - 3 m ausgeführt werden.

Weitere Einzelheiten Merkmale und Vorteile der Erfindung ergeben sich aus der nachstehenden Beschreibung unter Bezugnahme auf die angeschlossenen Zeichnungen, in welchen bevorzugte Ausführungsformen dargestellt sind.

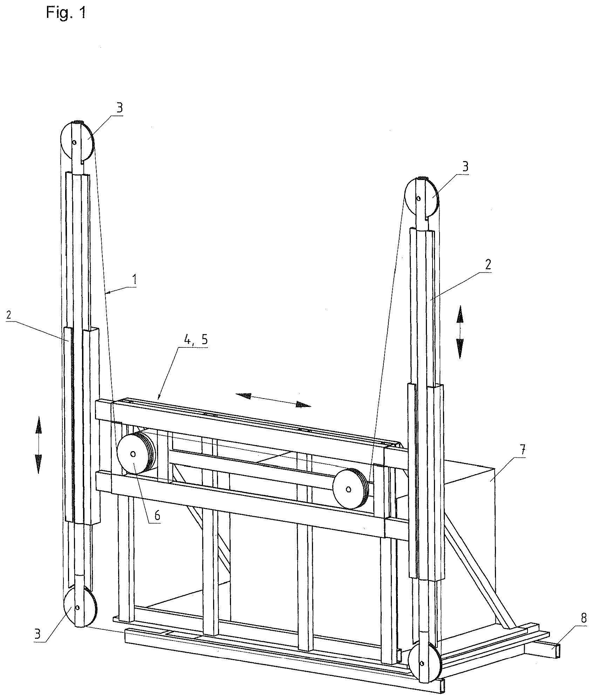

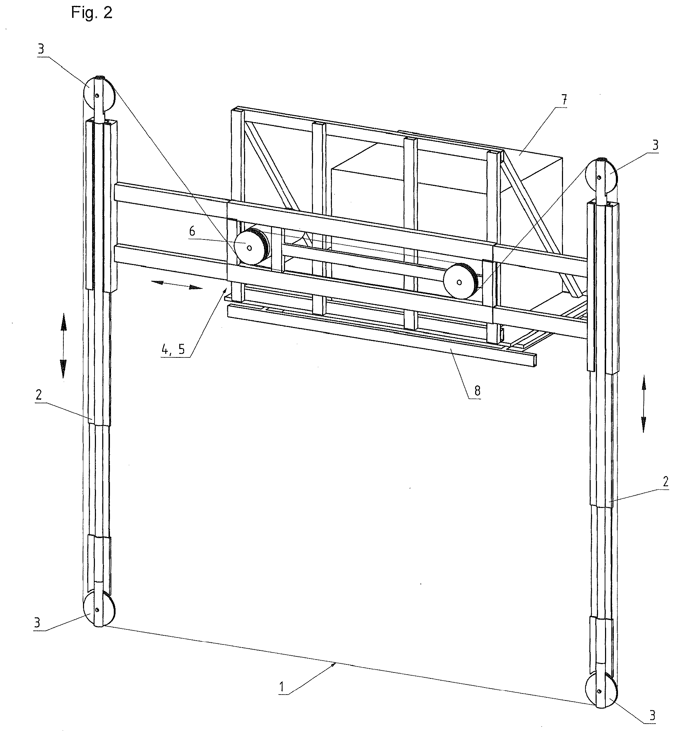

Es zeigt: Fig. 1 und Fig. 2 eine Ausführungsform einer erfindungsgemäßen Eintauchseilsäge.

In den Fig. ist eine Eintauchseilsäge mit einem Sägeaggregat zum Herauslösen eines massiven Werkstückes dargestellt, wobei das Sägeaggregat ein mit Diamantsegmenten versehenes Sägeseil 1 sowie eine Führungseinrichtung für das Sägeseil 1 aufweist. Die Führungseinrichtung weist zwei in einem Abstand voneinander angeordnete Längsarme 2, an welchen das Sägeseil 1 geführt ist, auf. Durch den Abstand der beiden Längsarme 2 ist die mögliche Schneidbreite der Eintauchseilsäge definiert, wobei der Abstand der beiden Längsarme 2 zueinander veränderbar ist. Die beiden Längsarme sind durch Teleskoparme gebildet, wodurch die Längserstreckung der Längsarme 2 veränderbar ist. Möglichkeiten der Veränderung der räumlichen Erstreckung ist in den Fig. mit einem Doppelpfeil angedeutet. An den Enden der beiden Längsarme 2 sind Umlenkrollen 3, in welchen das Sägeseil geführt ist, angeordnet.

Um die räumliche Erstreckung des Sägeaggregates verändern zu können, wobei das Sägeseil 2 die gewollte Seilspannung beibehält, ist ein Seilspeicher 4 und ein Seilspanner 5 vorgesehen, welcher Umlenkrollen 6, in welchen das Diamantseil 1 mehrmals geführt ist, aufweist. Der Abstand der Umlenkrollen 6 des Seilspeichers 4 bzw. des Seilspanners 5 ist veränderbar.

Die Eintauchseilsäge ist auf einer Trägervorrichtung 7 angeordnet, welche auf Gleisen 8 verschiebbar gelagert ist.

Der Einsatz der erfindungsgemäßen Vorrichtung kann beispielsweise wie folgt dargestellt werden:
Im Bereich der herauszulösenden Werkstücke werden Gleise 8 aufgelegt und mit einer Wasserwaage ausgerichtet. Anschließend werden eine Bohr- und Fräseinheit (nicht dargestellt) auf die Gleise 8 gehoben. Die Bohreinheit wird zur Schnittrichtung geschwenkt, auf die benötigte Position des Bohrloches gefahren und genau ausgerichtet. Das Bohrloch kann nun mittels der Bohreinheit in die gewünschte Tiefe getrieben werden.

Anschließend wird die Fräseinheit zum Bohrloch geschwenkt und genau auf das Bohrloch eingestellt. Die Fräse mit einem angetriebenen Diamantseil, welches die Fräse zum einen antreibt und zum anderen neben dem Fräskopf selber fräsende Wirkung hat, fräst nun unter Zuführen von Kühlwasser einen klar in der Breite und Länge definierten Schacht bis zum Bohrlochtiefsten. Das Bohrloch dient dabei als Führung und Abfluss des Kühl- und Schlammwassers. Bei Vertikalbohrungen muss eine Horizontalbohrung durchgeführt werden, um den Abfluss zu garantieren. Diese Bohrung bzw. dieser Schacht wird, zusammen mit einer weiteren Bohrung, für den weiteren Abbau mittels einer mobilen Eintauchseilsäge benötigt. Der Fräser wird herausgefahren. Die Vorrichtung umfassend die Bohr- und die Fräseinheit fährt nun über die Gleise 8 zum zweiten gewünschten Bohr- und Fräspunkt. Ist die Bohrung und Abschachtung beendet, fährt die kombinierte Bohr- und Fräseinheit zur Seite und die Eintauchseilsäge wird auf das Gleis 8 gehoben bzw. auf dem Gleis 8 verfahren. Die Eintauchseilsäge wird zum gewünschten Schnittpunkt gefahren und durch eine Einrichtung zum Ändern der räumlichen Ausrichtung des Sägeaggregates sowie durch eine Einrichtung zum Ändern der räumlichen Erstreckung des Sägeaggregates genau auf die zwei Bohrlöscher bzw. Schächte ausgerichtet. Die Teleskoparme der Eintauchseilsäge tauchen in die beiden Bohrlöcher ein. Die Eintauchseilsäge beginnt nun mittels des Diamantseils 1 den aus dem Berg herauszulösenden Steinblock unter Seildruck zwischen den zwei Schächten bis zum Schachttiefsten unter Zuführen von Kühlwasser herauszusägen.

Während der erste Abschlag gesägt wird, beginnt die kombinierte Bohr- und Fräseinheit bereits mit den nächsten Bohrlöschern bzw. Schächten. So fährt die kombinierte Bohr- und Fräseinheit der Eintauchseilsäge immer voraus und die Eintauchseilsäge folgt auf dem selben Gleis. Hat die Eintauchseilsäge ihren Schnitt beendet fährt sie auf dem Gleis 8 zu den nächsten Bohrlöchern bzw. Schächten und das letzte Gleissegment kann hinter der Eintauchseilsäge abgebaut und vor der kombinierten Bohr- und Fräseinheit wieder angebaut werden.

Da die in den Berg eintauchenden Umlenkrollen 3 durch einen Fräskopf gebildet sind, muss keine zusätzliche Fräse zum Einsatz kommen. In diesem Fall, insbesondere wenn kleinere Schnitte ausgeführt werden können, ist es ausreichend, wenn eine Bohreinheit und die erfindungsgemäße Eintauchseilsäge zum Einsatz kommen.

Die erfindungsgemäße Vorrichtung kann auch im Stollen- oder Tunnelvortrieb eingesetzt werden.

Zusammenfassend kann ein Ausführungsbeispiel der Erfindung wie folgt dargestellt werden:
Mit der erfindungsgemäßen Eintauchseilsäge wird erreicht, dass die Eintauchseilsäge immer mit einer klar definierten Diamantseillänge ausgestattet ist, d.h. das Diamantseil braucht für einen Schnitt nie eingelegt, geöffnet, verlängert oder verkürzt werden. Das Diamantseil ist Bestandteil der Maschine, d.h. permanent integriert.

Das Sägeseil ist in Schneidrichtung gesehen an den beiden vordersten Umlenkrollen geführt, wobei die Eintauchseilsäge auf Druck Material schneidet und sich die beiden vorderen Umlenkrollen immer im Wesentlichen auf Höhe der Schneidkante befinden.

Eine Eintauchseilsäge zum Herauslösen beispielsweise eines Steinblocks aus einem Berg, weist ein Sägeaggregat auf, wobei das Sägeaggregat ein insbesondere mit Diamantsegmenten versehenes Sägeseil 1 sowie eine Führungseinrichtung für das Sägeseil 1 aufweist und wobei das Sägeseil 1 angetrieben wird. Die Führungseinrichtung weist wenigstens zwei in einem Abstand voneinander angeordnete Längsarme 2, an welchen das Sägeseil 1 geführt ist, auf. Die Eintauchseilsäge wird vor einem abzubauenden Werkstück angeordnet und die wenigstens zwei Längsarme 2 werden in Bezug auf im Werkstück vorhandene Bohrlöcher ausgerichtet und in die Bohrlöcher eingeführt.

## Patentansprüche

1. Eintauchseilsäge mit einem Sägeaggregat zum Herauslösen eines massiven Werkstückes, wie Felsen oder Betonfundamente, geeignet zum Herauslösen eines Steinblockes aus einem Berg, wobei das Sägeaggregat ein insbesondere mit Diamantsegmenten versehenes Sägeseil (1) sowie eine Führungseinrichtung für das Sägeseil (1) aufweist, wobei die Führungseinrichtung wenigstens zwei in einem Abstand voneinander angeordnete, durch Teleskoparme gebildete Längsarme (2), an welchen das Sägeseil (1) geführt ist, aufweist, wobei ein Abstand der beiden Längsarme (2) zueinander veränderbar ist, wobei das Sägeseil (1) durch einen Antrieb antreibbar ist, wobei die Längserstreckung der beiden Längsarme (2) veränderbar ist, sodass die räumliche Erstreckung der Führungseinrichtung veränderbar ist, während das Sägeseil (1) angetrieben ist, und wobei an den Teleskoparmen Umlenkrollen (3), in welchen das Sägeseil (1) geführt ist, angeordnet sind, **dadurch gekennzeichnet, dass** die Eintauchseilsäge einen Seilspeicher (4) mit wenigstens zwei Umlenkrollen (6), in welchen das Sägeseil (1) mehrmals geführt ist, aufweist und dass Umlenkrollen (3) der Führungseinrichtung durch einen Fräskopf gebildet sind.

2. Eintauchseilsäge nach Anspruch 1, **dadurch gekennzeichnet, dass** der Abstand der beiden Längsarme (2) im Wesentlichen die Schneidbreite der Eintauchseilsäge definiert.

3. Eintauchseilsäge nach Anspruch 1 oder 2, **dadurch gekennzeichnet, dass** der Abstand der Umlenkrollen (6) des Seilspeichers (4) zueinander veränderbar, insbesondere über Teleskoparme veränderbar ist.

4. Eintauchseilsäge nach einem der Ansprüche 1 bis 3, **dadurch gekennzeichnet, dass** sie einen Seilspanner (5) aufweist.

5. Eintauchseilsäge nach Anspruch 4, **dadurch gekennzeichnet, dass** der Seilspanner (5) und der Seilspeicher (4) aus den selben Bauteilen gebildet ist.

6. Eintauchseilsäge nach einem der Ansprüche 1 bis 5, **dadurch gekennzeichnet, dass** sie wenigstens eine Einrichtung zum Ändern der räumlichen Ausrichtung des Sägeaggregates, insbesondere eine Einrichtung zum Drehen und/oder Kippen und/oder Schwenken der Führungseinrichtung, aufweist.

7. Verfahren zum Herauslösen eines massiven Werkstückes, wie Felsen oder Betonfundamente, insbesondere zum Herauslösen eines Steinblockes aus einem Berg, wobei eine Eintauchseilsäge mit einem Sägeaggregat zum Herauslösen eines massiven Werkstückes verwendet wird, wobei das Sägeaggregat ein insbesondere mit Diamantsegmenten versehenes Sägeseil (1) sowie eine Führungseinrichtung für das Sägeseil (1) aufweist, wobei die Führungseinrichtung wenigstens zwei in einem Abstand voneinander angeordnete Längsarme (2), an welchen das Sägeseil (1) geführt ist, aufweist, wobei die Eintauchseilsäge vor einem abzubauenden Werkstück angeordnet wird, wobei die wenigstens zwei Längsarme (2) in Bezug auf im Werkstück vorhandene Bohrlöcher ausgerichtet und in die Bohrlöcher eingeführt werden, und wobei das Sägeseil (1) angetrieben wird, **dadurch gekennzeichnet, dass** die Eintauchseilsäge einen Seilspeicher (4), mit wenigstens zwei Umlenkrollen (6), in welchen das Sägeseil (1) mehrmals geführt ist, aufweist und dass die räumliche Erstreckung der Führungseinrichtung beim Ausrichten der Eintauchseilsäge in Bezug auf im Werkstück vorhandene Bohrlöcher und während die Eintauchseilsäge angetrieben wird verändert wird, indem die Längserstreckung der beiden Längsarme (2) und ggf. ein Abstand der beiden Längsarme (2) zueinander verändert wird.

## Claims

1. Plunge cable saw having a sawing unit for extracting a massive workpiece, such as rocks or concrete foundations, suitable for extracting a block of stone from a mountain, wherein the sawing unit comprises a saw cable (1), in particular provided with diamond segments, as well as a guide device for the saw cable (1), wherein the guide device has at least two longitudinal arms (2), which are arranged at a distance from one another, are formed by telescopic arms and on which the saw cable (1) is guided, wherein a distance of the two longitudinal arms (2) relative to one another is variable, wherein the saw cable (1) is drivable by a drive, wherein the longitudinal extension of the two longitudinal arms (2) is variable, so that the spatial extension of the guide device is variable while the saw cable (1) is driven, and wherein deflection pulleys (3), in which the saw cable (1) is guided, are arranged on the telescopic arms, **characterized in that** the plunge cable saw has a cable accumulator (4) having at least two deflection pulleys (6) in which the saw cable (1) is guided several times, and **in that** deflection pulleys (3) of the guide device are formed by a milling head.

2. Plunge cable saw according to claim 1, **characterized in that** the distance between the two longitudinal arms (2) substantially defines the cutting width of the plunge cable saw.

3. Plunge cable saw according to claim 1 or 2, **characterized in that** the distance of the deflection pulleys (6) of the cable accumulator (4) from each other is variable, in particular variable via telescopic arms.

4. Plunge cable saw according to one of claims 1 to 3, **characterized in that** it has a cable tensioner (5).

5. Plunge cable saw according to claim 4, **characterized in that** the cable tensioner (5) and the cable accumulator (4) are formed from the same components.

6. Plunge cable saw according to one of claims 1 to 5, **characterized in that** it has at least one device for changing the spatial orientation of the sawing unit, in particular a device for rotating and/or tilting and/or pivoting the guide device.

7. Method for extracting a massive workpiece, such as rocks or concrete foundations, in particular for extracting a block of stone from a mountain, wherein a plunge cable saw having a sawing unit is used for extracting a massive workpiece, wherein the sawing unit comprises a saw cable (1), in particular provided with diamond segments, as well as a guide device for the saw cable (1), wherein the guide device comprises at least two longitudinal arms (2) arranged at a distance from each other, on which the saw cable (1) is guided, wherein the plunge cable saw is arranged in front of a workpiece to be extracted, wherein the at least two longitudinal arms (2) are aligned with respect to boreholes present in the workpiece and are introduced into the boreholes, and wherein the saw cable (1) is driven, **characterized in that** the plunge cable saw comprises a cable accumulator (4), having at least two deflection pulleys (6), in which the saw cable (1) is guided a number of times, and **in that** the spatial extension of the guide device is changed during alignment of the plunge cable saw with respect to boreholes present in the workpiece and while the plunge cable saw is being driven, by that the longitudinal extension of the two longitudinal arms (2) and, optionally, a distance of the two longitudinal arms (2) from one another are changed.

## Revendications

1. Scie à câble plongeant avec un groupe de sciage destiné à découper une pièce massive telle que de la roche ou des fondations en béton, convenant pour détacher un bloc de roche d'une montagne, dans laquelle le groupe de sciage comprend un câble de scie (1), en particulier muni de segments diamantés, et un dispositif de guidage du câble de scie (1), dans lequel le dispositif de guidage comporte au moins deux bras longitudinaux (2) formés par des bras télescopiques et disposés à distance l'un de l'autre sur lesquels le câble de scie (1) est guidé, une distance entre les deux bras longitudinaux (2) étant modifiable, le câble de scie (1) pouvant être entraîné par un entraînement, dans lequel l'étendue en longueur des deux bras longitudinaux (2) est modifiable de sorte que l'étendue dans l'espace du dispositif de guidage peut être modifiée pendant que le câble de scie (1) est entraîné, et dans lequel sont disposés sur les bras télescopiques des rouleaux de renvoi (3) dans lesquels le câble de scie (1) est passé, **caractérisée en ce qu'**elle comprend une réserve de câble (4) avec au moins deux rouleaux de renvoi (6) dans laquelle le câble de scie (1) est passé plusieurs fois, et **en ce que** des rouleaux de renvoi (3) du dispositif de guidage sont formés par une tête de fraisage.

2. Scie à câble plongeant selon la revendication 1, **caractérisée en ce que** la distance entre les deux bras longitudinaux (2) définit pour l'essentiel la largeur de coupe de la scie.

3. Scie à câble plongeant selon la revendication 1 ou 2, **caractérisée en ce que** la distance entre les rouleaux de renvoi (6) de la réserve de câble (4) peut être modifiée, en particulier à l'aide de bras télescopiques.

4. Scie à câble plongeant selon l'une des revendications 1 à 3, **caractérisée en ce qu'**elle comporte un tendeur de câble (5).

5. Scie à câble plongeant selon la revendication 4, **caractérisée en ce que** le tendeur de câble (5) et la réserve de câble (4) sont formés par les mêmes éléments.

6. Scie à câble plongeant selon l'une des revendications 1 à 5, **caractérisée en ce qu'**elle comprend au moins un dispositif pour modifier l'orientation dans l'espace du groupe de sciage, en particulier un dispositif pour faire tourner et/ou basculer et/ou pivoter le dispositif de guidage.

7. Procédé pour découper une pièce massive telle que de la roche ou des fondations en béton, en particulier pour détacher un bloc de roche d'une montagne, utilisant une scie à câble plongeant avec un groupe de sciage pour découper une pièce massive, dans lequel le groupe de sciage comprend un câble de scie (1), en particulier muni de segments diamantés, ainsi qu'un dispositif de guidage pour le câble de scie (1), le dispositif de guidage comprenant au moins deux bras longitudinaux (2) disposés à distance l'un de l'autre sur lesquels le câble de scie (1) est guidé, dans lequel la scie à câble plongeant est disposée devant une pièce à abattre, dans lequel les au moins deux bras longitudinaux (2) sont orientés par rapport à des trous forés dans la pièce et introduits dans les trous forés et dans lequel le câble de scie (1) est entraîné, **caractérisé en ce que** la scie à câble plongeant comporte une réserve de câble (4) avec au moins deux rouleaux de renvoi (6) dans laquelle le câble de scie (1) est passé plusieurs fois et **en ce que** l'étendue dans l'espace du dispositif de guidage est modifiée lors de l'orientation de la scie à câble plongeant par rapport aux trous forés dans la pièce et pendant l'entraînement de la scie à câble plongeant, grâce à la modification de l'étendue en longueur des deux bras longitudinaux (2) et, au besoin, de la distance entre les deux bras longitudinaux (2).
